# EUROPÄISCHE PATENTANMELDUNG

(11) **EP 4 082 943 A1**
(43) Veröffentlichungstag der Anmeldung: **02.11.2022**
(21) Anmeldenummer: 21200864.3
(22) Anmeldetag: 05.10.2021
(51) Int. Cl.: B65G 17/06, B65G 17/38

(54) **FÖRDERANLAGE**

(30) Priorität: 30.04.2021 DE 102021111168
(71) Anmelder: Rasch Consulting GmbH, 33649 Bielefeld (DE)
(72) Erfinder: SCHNEUING, Ralf, 33649 Bielefeld (DE)
(74) Vertreter: Dantz, Jan Henning

(57) **Zusammenfassung**

Eine Förderanlage (1) umfasst eine umlaufende Führungsschiene (2), entlang der eine Vielzahl von Förderelementen (5) in eine Fahrtrichtung verfahrbar sind, wobei jedes Förderelement (5) eine Auflagefläche zum Ablegen und Transportieren von Gegenständen aufweist, wobei zwei benachbarte Förderelemente (5) relativ zueinander um eine erste Achse (12) senkrecht zur Fahrtrichtung und eine zweite, winklig zur ersten Achse (12) angeordnete Achse (15) senkrecht zur Fahrtrichtung verschwenkbar gelagert sind und zwischen einem ersten und einem zweiten Förderelement (5) mindestens ein Verbindungselement (6) angeordnet ist, das an dem ersten Förderelement (5) gehalten ist, wobei das mindestens eine Verbindungselement (6) an dem zweiten Förderelement (5) in einer Aufnahme (13) verschiebbar gelagert ist. Dadurch kann die Förderanlage flexibel aufgebaut werden und einen sicheren Transport der Gegenstände gewährleisten.

## Beschreibung

Die vorliegende Erfindung betrifft eine Förderanlage mit einer umlaufenden Führungsschiene, entlang der eine Vielzahl von Förderelementen in eine Fahrtrichtung verfahrbar sind, wobei jedes Förderelement eine Auflagefläche zum Ablegen und Transportieren von Gegenständen aufweist, wobei zwei benachbarte Förderelemente relativ zueinander um eine erste Achse senkrecht zur Fahrtrichtung und eine zweite, winklig zur ersten Achse angeordnete Achse senkrecht zur Fahrtrichtung verschwenkbar gelagert sind und zwischen einem ersten und einem zweiten Förderelement mindestens ein Verbindungselement angeordnet ist, das an dem ersten Förderelement gehalten ist.

Es gibt Förderanlagen zum Transportieren von Gegenständen, bei denen die Gegenstände auf Förderelementen mit einer Auflagefläche abgelegt werden, beispielsweise bei einer Sortieranlage, einem Gurtförderer oder Rollenbahnen. Bei diesen Förderanlagen besteht das Problem, dass die Förderelemente entlang einer Führungsschiene umlaufend geführt sind, an der Umlenkungen in horizontale und vertikale Richtung vorgesehen werden müssen, an denen sich benachbarte Förderelemente relativ zueinander bewegen, so dass sich zwischen den Förderelementen an der Auflagefläche Spalte bilden. Falls Teile von Gegenständen in diese Spalte an einer Umlenkung gelangen und die Förderelemente relativ zueinander bewegt werden, kann dies zur Beschädigung von Gegenständen führen.

Es ist daher Aufgabe der vorliegenden Erfindung, eine Förderanlage mit umlaufenden Förderelementen zu schaffen, die auch an Umlenkungen einen zuverlässigen Transport von Gegenständen gewährleistet.

Diese Aufgabe wird mit einer Förderanlage mit den Merkmalen des Anspruches 1 gelöst.

Bei der erfindungsgemäßen Förderanlage sind eine Vielzahl von Förderelementen entlang einer umlaufenden Führungsschiene in eine Fahrtrichtung verfahrbar, wobei jedes Förderelement eine Auflagefläche zum Ablegen und Transportieren von Gegenständen aufweist. Zwei benachbarte Förderelemente sind dabei relativ zueinander um eine erste Achse senkrecht zur Fahrtrichtung und eine zweite, winklig zur ersten Achse angeordnete Achse senkrecht zur Fahrtrichtung verschwenkbar gelagert, so dass die Förderelemente entlang von Umlenkungen an der Führungsschiene verfahrbar sind. Zwischen einem ersten und einem zweiten Förderelement ist mindestens ein Verbindungselement angeordnet, das an dem ersten Förderelement gehalten ist und an dem zweiten Förderelement in einer Aufnahme verschiebbar gelagert ist. Dadurch kann das mindestens eine Verbindungselement einen Spalt zwischen dem ersten Förderelement und dem zweiten Förderelement an einer Umlenkung überbrücken, um ein Einklemmen von Gegenständen an dem Spalt beim Verfahren der Förderelemente sicher zu verhindern.

Vorzugsweise ist die Führungsschiene unterhalb der Förderelemente angeordnet, und die Förderelemente sind jeweils über einen Laufwagen mit Führungsrollen entlang der Führungsschiene verfahrbar. Durch die Abstützung der Förderelemente an einer Unterseite kann die Oberseite der Förderelemente vollständig zum Transport der Gegenstände genutzt werden. Die beiden Laufwagen des ersten und des zweiten Förderelementes können dabei über ein Kreuzgelenk miteinander verbunden sein, um die beiden Förderelemente relativ zueinander um die erste Achse und die zweite Achse verschwenkbar zu lagern. Dadurch können die beiden benachbarten Förderelemente über die Laufwagen sowohl um vertikale Umlenkungen als auch horizontale Umlenkungen geführt werden.

Das mindestens eine Verbindungselement kann an dem ersten Förderelement bevorzugt um eine Achse drehbar gelagert sein, die parallel zu der ersten Achse angeordnet ist. Die erste Achse kann beispielsweise horizontal ausgerichtet sein, so dass bei einem Verfahren der Förderelemente sowohl die Laufwagen um eine erste Achse als auch das Verbindungselement an dem ersten Förderelement um eine parallele Achse verschwenkbar sind. Zusätzlich kann das mindestens eine Verbindungselement an dem ersten Förderelement auch um eine Achse verschwenkbar sein, die parallel zur zweiten Achse angeordnet ist. Das Verbindungselement kann somit die gleichen Schwenkbewegungen ausführen, wie zwei benachbarte Förderelemente relativ zueinander, um einen Spalt zwischen den Förderelementen zu überdecken. Durch die verschiebbare Anordnung des Verbindungselementes in der Aufnahme können Längenänderungen des Spaltes zwischen den beiden Förderelementen einfach kompensiert werden.

Für einen kompakten Aufbau kann an dem mindestens einen Verbindungselement eine Lageraufnahme ausgebildet sein, die einen verjüngten Mittelabschnitt und aufgeweitete äußere Abschnitte aufweist, so dass das mindestens eine Verbindungselement um die Lageraufnahme verschwenkbar gehalten ist, wobei das Verbindungselement sowohl um eine Achse parallel zu der ersten Achse als auch um eine Achse parallel zu der zweiten Achse verschwenkbar ist.

Vorzugsweise sind über die Breite des ersten Förderelementes senkrecht zur Fahrtrichtung eine Vielzahl von Verbindungselementen angeordnet. Die Verbindungselemente können beispielsweise stegförmig ausgebildet sein, und jeweils in eine kanalförmige Aufnahme mit einem freien Ende eingefügt sein. Ein solcher Aufnahmekanal kann sich im Wesentlichen parallel zur Fahrtrichtung der Förderelemente erstrecken. Über die Breite verteilt können beispielsweise zwischen 3 bis 50 Verbindungselemente, insbesondere 5 bis 25 Verbindungselemente, vorgesehen sein, so dass eine Fläche zwischen den beiden Förderelementen durch eine Vielzahl von Verbindungselementen überdeckt wird, um möglichst keine Spalte entstehen zu lassen. Die Verbindungselemente können dabei sowohl aus einem formstabilen Material, beispielsweise Kunststoff oder Metall, hergestellt sein, wobei die Verbindungselemente dann entsprechend verschwenkbar an einem der Förderelemente gelagert sind, oder die Verbindungselemente können zusätzlich oder alternativ aus einem biegbaren Material hergestellt sein, um einen Spalt zwischen zwei benachbarten Förderelementen beim Durchfahren einer Umlenkung zu überdecken.

In einer bevorzugten Ausgestaltung ist jedes Förderelement an mindestens einer Seite entlang einer seitlichen Führung geführt. Vorzugsweise sind die Förderelemente an gegenüberliegenden Seiten jeweils geführt, wobei zumindest ein Teil der Förderelemente, bevorzugt alle Förderelemente, ein hervorstehendes Führungselement aufweisen, das in die seitliche Führung eingreift. Die Führungselemente können bevorzugt durch eine Achse gebildet sein, an denen die Verbindungselemente verschwenkbar gelagert sind. Diese Achse kann seitlich an gegenüberliegenden Seiten hervorstehen und entlang der Führung bewegt werden, wahlweise als Gleitführung oder als Rollenführung.

Für einen effektiven Antrieb der Förderelemente kann an der Führungsschiene mindestens ein Motor mit einer Antriebsrolle zum Antrieb der Förderelemente vorgesehen sein. Dabei kann jedes Förderelement einen Laufwagen aufweisen, der zwischen der Antriebsrolle und einer Gegendruckrolle durchführbar ist. Über die umlaufende Führungsschiene verteilt können mehrere solcher Antriebe verteilt sein, je nach Länge der Führungsschiene. Diese Art des Antriebes der Förderelemente verringert die Zugbelastung zwischen benachbarten Förderelementen, da über die Wegstrecke verteilt Antriebseinrichtungen bereitgestellt werden, so dass auch umlaufende Führungsschienen mit großer Länge hergestellt werden können, ohne dass die Belastung von Verbindungselementen zwischen benachbarten Förderelementen zu hoch wird. Durch die Ergänzung weiterer Antriebseinrichtungen entlang der Führungsschiene kann die Länge der Führungsschiene beliebig gestaltet werden, so dass Übergänge zwischen verschiedenen Fördereinrichtungen vermieden werden können. Dies reduziert den Steuerungsaufwand erheblich.

Die Erfindung wird nachfolgend anhand eines Ausführungsbeispiels mit Bezug auf die beigefügten Zeichnungen näher erläutert. Es zeigen:

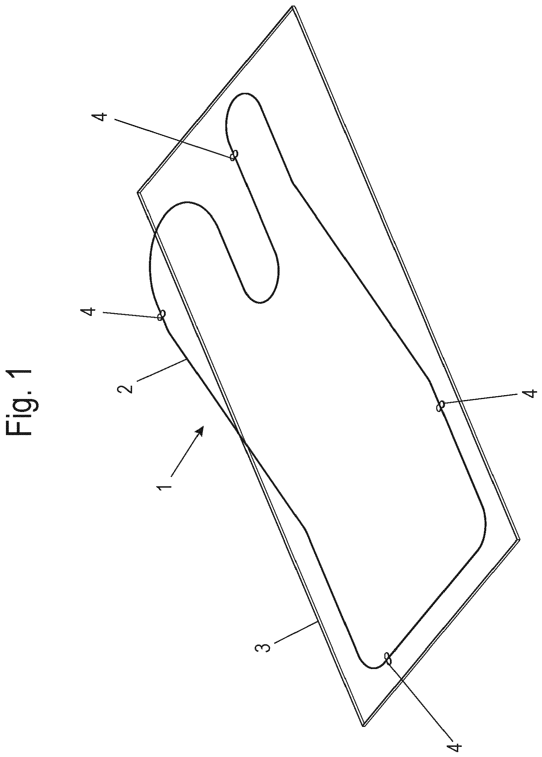

- Figur 1: eine schematische Ansicht einer Führungsbahn einer Förderanlage;
- Figur 2: eine perspektivische Ansicht einer erfindungsgemäßen Förderanlage;
- Figuren 3A und 3B: zwei Ansichten zweier benachbarter Förderelemente der Förderanlage der Figur 2;
- Figuren 4A und 4B: zwei Ansichten zweier benachbarter Förderelemente in einer abgewinkelten Position;
- Figuren 5A und 5B: zwei Ansichten zweier benachbarter Förderelemente in einer abgewinkelten Position;
- Figur 6: eine Detailansicht auf zwei benachbarte Förderelemente in einer verschwenkten Position;
- Figur 7: eine Detailansicht eines Verbindungselementes in einer Aufnahme eines benachbarten Förderelementes der Figur 6;
- Figuren 8A bis 8C: mehrere Ansichten eines Antriebes für die Förderelemente, und
- Figur 9: eine Ansicht einer Abstützung der Förderanlage über ein bodenseitiges Stützelement oder eine Aufhängung.

Eine Förderanlage 1 umfasst eine umlaufende Führungsschiene 2, die in einer schematisch dargestellten Halle 3 angeordnet ist. Die Führungsschiene 2 kann beliebig im Raum geführt sein und horizontale und vertikale Umlenkungen aufweisen. Entlang der Führungsschiene 2 sind schematisch dargestellte Antriebseinrichtungen 4 vorgesehen, die an unterschiedlichen Positionen der Führungsschiene 2 angeordnet sind.

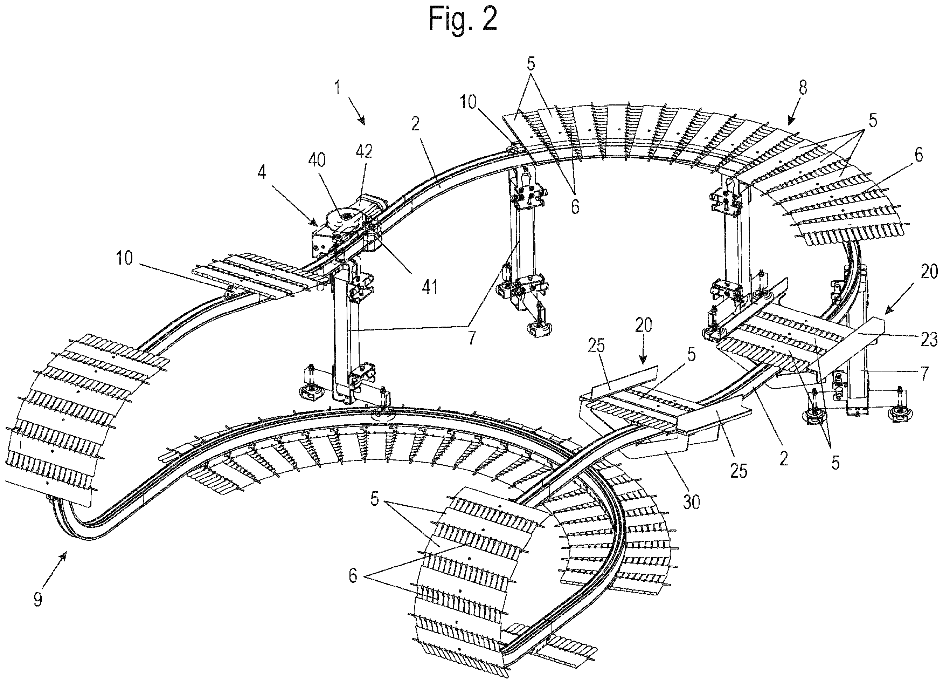

In Figur 2 ist die Förderanlage 1 mit der Führungsschiene 2 gezeigt, und es sind eine Vielzahl von Förderelementen 5 gezeigt, die eine Auflagefläche zum Ablegen und Transportieren von Gegenständen aufweisen. Zwischen zwei benachbarten Förderelementen 5 sind jeweils Verbindungselemente 6 angeordnet, die einen Spalt zwischen den Förderelementen 5 überdecken.

Die Führungsschiene 2 ist auf Ständern 7 abgestützt und kann die Förderelemente 5 um eine horizontale Umlenkung 8 und eine vertikale Umlenkung 9 führen, wie dies schematisch dargestellt ist. Bei einer horizontalen Umlenkung werden die Förderelemente 5 im Wesentlichen in der gleichen horizontalen Ebene bewegt und umgelenkt, während die Förderelemente 5 an einer vertikalen Umlenkung im Wesentlichen entlang einer vertikalen Ebene geführt sind. Die Führungsschiene 2 kann beliebig im Raum geneigt sein, und die Umlenkungen können einander überlagern, beispielsweise kann an einer horizontalen Umlenkung 8 zusätzlich eine vertikale Umlenkung 9 vorgesehen sein. Wenn nachfolgend die Begriffe "horizontal" und "vertikal" verwendet werden, soll dies nur die dargestellte Position aber keine Einschränkung darstellen, da die Förderelemente 5 über die Führungsschiene 2 beliebig im Raum bewegt werden können.

Jedes Förderelement 5 ist über einen Laufwagen 10 entlang der Führungsschiene 2 verfahrbar, wobei über die gesamte Länge der umlaufenden Führungsschiene 2 Förderelemente 5 angeordnet sind, die nur in Figur 2 teilweise nicht dargestellt sind.

Für den Antrieb der Förderelemente 5 umfasst eine Antriebseinrichtung 4 einen Motor 42, der eine Antriebsrolle 40 antreibt, wobei ein Laufwagen 10 eines Förderelementes 5 zwischen der Antriebsrolle 40 und einer Gegendruckrolle 41 durchführbar ist.

Die Förderelemente 5 können ferner an gegenüberliegenden Seiten über eine Führung 20 geführt sein, die wahlweise eine nach oben hervorstehende Anlagekante 25 aufweist, damit Gegenstände auf den Förderelementen 5 nicht seitlich herabfallen können, oder an mindestens einer Seite ist eine Gleitfläche 23 ausgebildet, die bevorzugt flächenbündig mit einer Oberseite der Förderelemente 5 ausgebildet ist, so dass Gegenstände über die Gleitfläche 23 bewegt werden können, beispielsweise wenn die Förderanlage 1 als Sortieranlage eingesetzt wird.

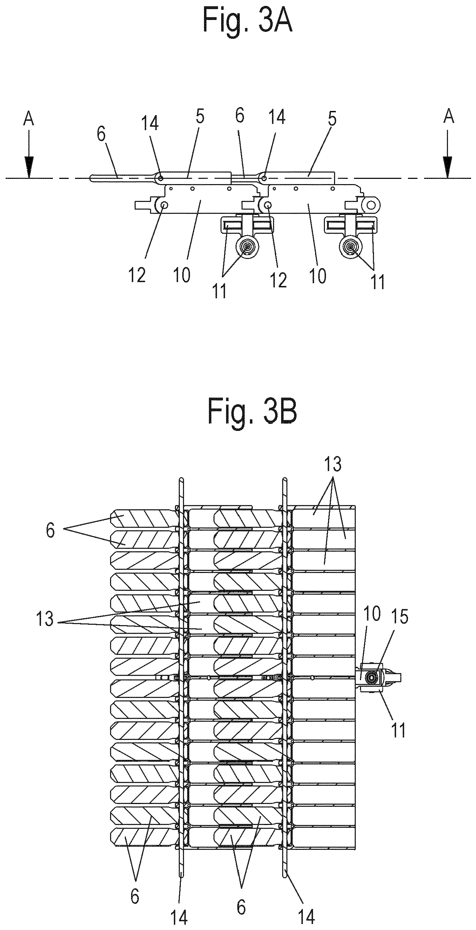

In den Figuren 3A und 3B sind zwei benachbarte Förderelemente gezeigt, die jeweils durch einen Laufwagen 10 abgestützt sind. Die beiden Laufwagen 10 sind über ein Kreuzgelenk miteinander verbunden, so dass die Laufwagen 10 um eine erste Achse 12 drehbar gelagert sind, die sich senkrecht zur Fahrtrichtung und in der Zeichnung horizontal erstreckt. Ferner sind die beiden Laufwagen 10 um eine zweite Achse 15 verschwenkbar zueinander gelagert, die sich ebenfalls senkrecht zur Fahrtrichtung erstreckt und in den Zeichnungen vertikal ausgerichtet ist. An jedem Laufwagen 10 sind Führungsrollen 11 drehbar gelagert, die an Laufflächen der Führungsschiene 2 verfahrbar sind.

Zwischen den Förderelementen 5 sind eine Vielzahl von Verbindungselementen 6 angeordnet, die im Wesentlichen stabförmig ausgebildet sind, aber auch eine andere Geometrie aufweisen können. Die Verbindungselemente 6 sind um eine Achse 14 drehbar gelagert, die parallel zu der Achse 12 zwischen den beiden Laufwagen 10 angeordnet ist.

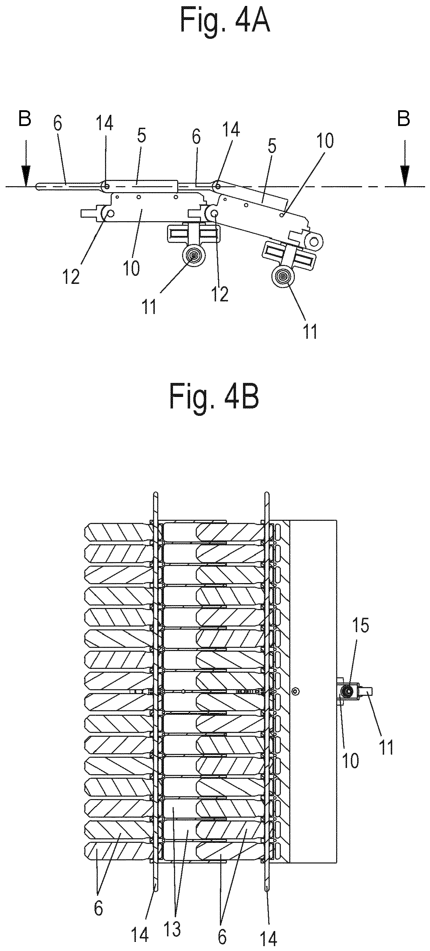

In den Figuren 4A und 4B sind die beiden Förderelemente 5 der Figur 3 nicht mehr in einer horizontalen Position gezeigt, sondern das rechte Förderelement 5 und der Laufwagen 10 sind nach unten abgewinkelt dargestellt. Hierfür ist der rechte Laufwagen 10 um die Achse 12 nach unten verschwenkt worden, und das Förderelement 5 ist relativ zu den Verbindungselementen 6 um die Achse 14 verschwenkt worden. Da die Laufwagen 10 um die Achse 12 verschwenkt sind, wurde die Achse 14 relativ zu dem linken Förderelement 5 bewegt, so dass die Verbindungselemente 6 aus den Aufnahmen 13 geringfügig herausgezogen wurden. Jedes Verbindungselement 6 ist dabei aus dem jeweiligen Aufnahmekanal der Aufnahme 13 herausgezogen worden.

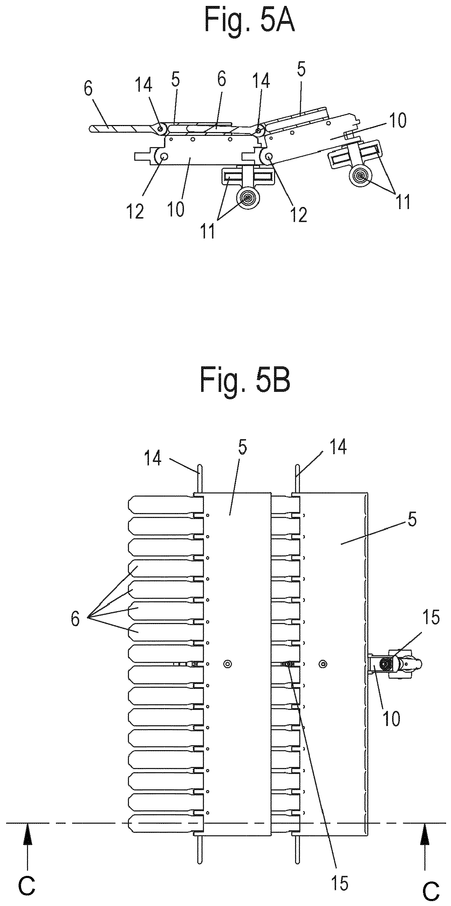

In den Figuren 5A und 5B sind die beiden benachbarten Förderelement 5 der Figur 5 gezeigt, wobei das rechte Förderelement 5 ansteigend abgewinkelt wurde. Dadurch sind die beiden Laufwagen 10 nicht mehr in der gleichen Ausrichtung angeordnet, sondern wurden um die Achse 12 verschwenkt. Diese Schwenkbewegung führt dazu, dass das Förderelement 5 auf der rechten Seite etwas näher zu dem Förderelement 5 auf der linken Seite bewegt wurde, so dass die Verbindungselemente 6 etwas weiter in die Aufnahme 13 eingeschoben wurden.

In den Figuren 3 bis 5 ist der Spalt zwischen den beiden Förderelementen 5 durch die Verbindungselemente 6 überdeckt, unabhängig davon, ob die Förderelemente 5 in der gleichen Ebene ausgerichtet sind, wie dies in Figur 3 gezeigt ist, oder winklig zueinander angeordnet sind, wie dies die Figuren 4 und 5 zeigen. Die Verbindungselemente 6 können entsprechend in die Aufnahmen 13 eingeschoben oder herausgezogen werden. Die Verbindungselemente 6 sind dabei um die Achse 14 drehbar gelagert, die beispielsweise als Stab ausgebildet ist, der an gegenüberliegenden Seiten der Förderelemente 5 hervorsteht.

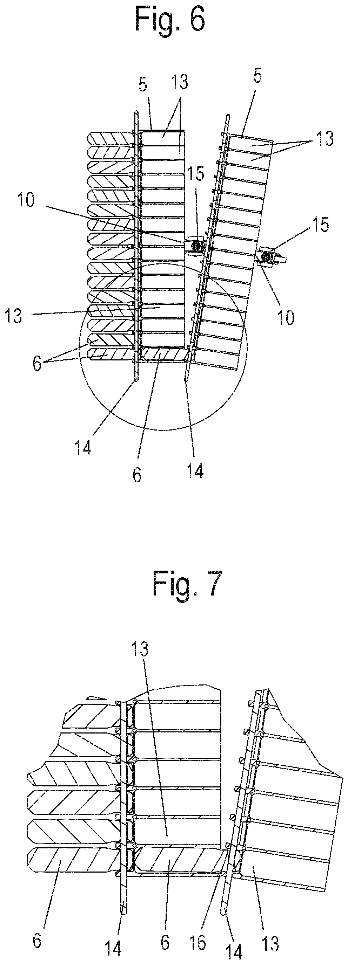

Die benachbarten Förderelemente 5 können nicht nur um eine horizontale Achse senkrecht zur Förderrichtung bewegt werden, sondern auch um eine vertikale Achse 15, wie dies in Figur 6 dargestellt ist. Die benachbarten Laufwagen 10 können an einer horizontalen Umlenkung 8 um die Achse 15 verschwenkt werden, wobei sich dadurch ein keilförmiger Spalt oder V-förmiger Spalt zwischen den benachbarten Förderelementen 5 ergibt. In der Schnittansicht der Figur 6 sind dabei die beiden Förderelemente 5 nur im Bereich der Aufnahmen 13 gezeigt, wobei nur eines der Verbindungselemente 6 an dem rechten Förderelement 5 dargestellt ist. Dieses Verbindungselement 6 ist in Figur 7 im Detail gezeigt.

Das Verbindungselement 6 umfasst eine Lageraufnahme 16, die einen verjüngten Mittelabschnitt und sich aufweitende äußere Abschnitte aufweist. Dadurch kann die Achse 14 in einem gewissen Winkelbereich in der Lageraufnahme 16 gedreht werden, beispielsweise in einem Bereich zwischen 2° und 20°, insbesondere 4° und 15°. Dadurch lassen sich die benachbarten Förderelement 5 um die vertikale Achse 15 verschwenken, wobei sämtliche Verbindungselemente 6 in der jeweiligen Aufnahme 13 des benachbarten Förderelementes 5 angeordnet bleiben, so dass der keilförmige oder V-förmige Spalt zwischen den benachbarten Förderelementen 5 durch die Verbindungselemente 6 überdeckt bleibt. Dabei werden die in Figur 6 auf der unteren Seite der Achse 15 angeordneten Verbindungselemente 6 in die Aufnahmen 13 eingeschoben, während die oberhalb der Achse 15 angeordneten, nicht dargestellten Verbindungselemente aus den Aufnahmen 13 herausgezogen werden. Durch diese Anordnung kann der Spalt zwischen den Förderelementen durch die Verbindungselemente 6 überbrückt werden, auch wenn Förderelemente relativ zueinander um die Achse 15 verschwenkt angeordnet sind.

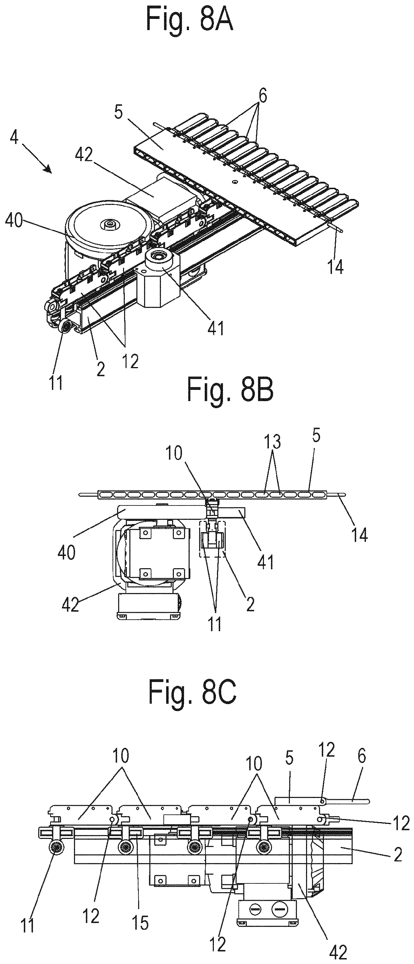

In den Figuren 8A bis 8C ist eine Antriebseinrichtung 4 der Förderanlage 1 im Detail gezeigt. Die Antriebseinrichtung 4 umfasst einen Motor 42, der die Antriebsrolle 40 antreibt, die an einer Seitenfläche eines Laufwagens 10 anliegt, wobei der Laufwagen 10 auf der gegenüberliegenden Seite durch eine Gegendruckrolle 41 abgestützt ist. Durch diesen Reibrollenantrieb kann jeder Laufwagen 10 in Förderrichtung angetrieben werden, wobei abhängig von der Länge der Führungsschiene 2 eine Vielzahl von Antriebseinrichtungen 4 vorgesehen werden kann. Jeder Laufwagen 10 ist dabei über die Führungsrollen 11 in der Führungsschiene 2 geführt.

Die Förderelemente 5 sind im Wesentlichen plattenförmig ausgebildet und umfassen Aufnahmen 13 in Form von Aufnahmekanälen, die im Querschnitt rechteckig, rund oder oval ausgebildet sind, so dass die stegförmigen Verbindungselemente 6 jeweils in eine Aufnahme 13 eingefügt werden können.

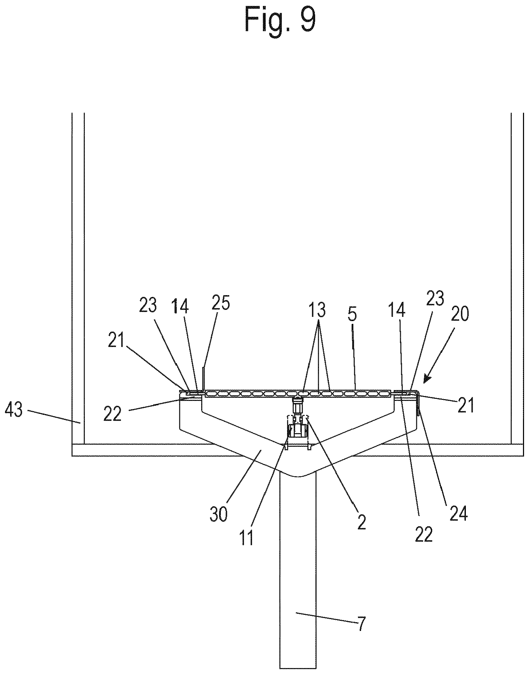

In Figur 9 ist ein Förderelement 5 gezeigt, das an gegenüberliegenden Seiten in einer seitlichen Führung 20 geführt ist. Hierfür steht die stabförmige Achse 14 seitlich hervor und ist in einer nutförmigen Aufnahme 21 angeordnet mit einer unteren Gleitfläche 22. An der Oberseite ist ein winkelförmiges Profil vorgesehen, das die Aufnahme 21 überdeckt. Auf der rechten Seite der Figur 9 ist dabei die Führung 20 durch eine Gleitfläche 23 überdeckt, das durch einen Schenkel des winkelförmigen Profils gebildet ist, so dass auf der rechten Seite Gegenstände von dem Förderelement 5 auf die Gleitfläche 23 bewegt werden können, die im Wesentlichen flächenbündig mit der Oberseite der Förderelemente 5 ausgerichtet sind. Auf der linken Seite ist das winkelförmige Profil anders positioniert, so dass eine nach oben hervorstehende Anlagekante 25 ausgebildet ist, die verhindert, dass Gegenstände auf dem Förderelement 5 zur linken Seite verschoben werden. Dadurch können die Bereiche definiert werden, an denen die Gegenstände auf die Förderelemente 5 aufgeladen oder von diesen heruntergeschoben werden.

Die Führung 20 ist an Haltern 30 montiert, die bügelförmig ausgebildet sind und beispielsweise auf einem Ständer 7 fixiert sind. Die Führungsschiene 2 lässt sich somit an einem Boden abstützen. Alternativ kann die Führungsschiene 2 auch zumindest teilweise an einer Hängekonstruktion 43 gehalten sein, wie dies schematisch dargestellt ist.

In dem dargestellten Ausführungsbeispiel sind die Förderelemente 5 und die Verbindungselemente 6 aus einem formstabilen Material hergestellt, insbesondere aus Kunststoff. Die Verbindungselemente 6 können auch aus einem elastischen Material hergestellt sein, um eine Schwenkbewegung benachbarter Förderelemente 5 besser kompensieren zu können. Daher kann bei den Verbindungselementen 6 auch ein elastischer Kunststoff oder ein Gummimaterial eingesetzt werden.

Zudem kann die schwenkbare Lagerung der Verbindungselemente 6 auch anders ausgebildet sein als dargestellt. Beispielsweise können die Verbindungselemente 6 auch mehrteilig ausgebildet sein und relativ zueinander verschwenkbare oder biegbare Teile aufweisen.

Die Förderelemente 5 können im Wesentlichen plattenförmig ausgebildet sein und je nach Anwendungsfall mit unterschiedlicher Breite oder Länge hergestellt werden.

In dem dargestellten Ausführungsbeispiel ist jedes Verbindungselement 6 an einem ersten Förderelement um zwei Achsen, nämlich die Achse 14 und eine Achse rechtwinklig hierzu, schwenkbar gelagert, und an einem zweiten Förderelement 5 in einer Aufnahme 13 verschiebbar gehalten. Es ist auch möglich, die Verbindungselemente 6 an gegenüberliegenden Seiten jeweils in einer Aufnahme 13 eines Förderelementes 5 anzuordnen, so dass das Verbindungselement in den beiden Aufnahmen 13 verschiebbar gelagert ist. Statt einem Verschwenken um die Achse 14 kann dann eine Achse an oder in dem Verbindungselement angeordnet sein, so dass das Verbindungselement zwei verschwenkbare Abschnitte aufweist, oder das Verbindungselement kann aus einem biegbaren Material hergestellt sein, so dass die beiden Enden des Verbindungselementes in den Aufnahmen relativ zu einander durch eine Biegebewegung des Verbindungselements verschwenkt werden können. Eine solche Biegebewegung kann nicht nur parallel zu der Achse 14 ähnlich den Figuren 4A und 5A erfolgen, sondern auch rechtwinklig hierzu, also durch ein gebogenes Verbindungselement in Figur 7, das an den Enden in die zwei winklig zueinander angeordnete Aufnahmen eingefügt ist. Auch bei einer solche Ausführungsform ist das Verbindungselement an den beiden Förderelementen 5 gehalten.

### Bezugszeichenliste

- 1: Förderanlage
- 2: Führungsschiene
- 3: Halle
- 4: Antriebseinrichtung
- 5: Förderelement
- 6: Verbindungselement
- 7: Ständer
- 8: Umlenkung
- 9: Umlenkung
- 10: Laufwagen
- 11: Führungsrolle
- 12: Achse
- 13: Aufnahme
- 14: Achse
- 15: Achse
- 16: Lageraufnahme
- 20: Führung
- 21: Aufnahme
- 22: Gleitfläche
- 23: Gleitfläche
- 25: Anlagekante
- 30: Halter
- 40: Antriebsrolle
- 41: Gegendruckrolle
- 42: Motor
- 43: Hängekonstruktion

## Patentansprüche

1. Förderanlage (1) mit einer umlaufenden Führungsschiene (2), entlang der eine Vielzahl von Förderelementen (5) in eine Fahrtrichtung verfahrbar sind, wobei jedes Förderelement (5) eine Auflagefläche zum Ablegen und Transportieren von Gegenständen aufweist, wobei zwei benachbarte Förderelemente (5) relativ zueinander um eine erste Achse (12) senkrecht zur Fahrtrichtung und eine zweite, winklig zur ersten Achse (12) angeordnete Achse (15) senkrecht zur Fahrtrichtung verschwenkbar gelagert sind und zwischen einem ersten und einem zweiten Förderelement (5) mindestens ein Verbindungselement (6) angeordnet ist, das an dem ersten Förderelement (5) gehalten ist, **dadurch gekennzeichnet, dass** das mindestens eine Verbindungselement (6) an dem zweiten Förderelement (5) in einer Aufnahme (13) verschiebbar gelagert ist.

2. Förderanlage nach Anspruch 1, **dadurch gekennzeichnet, dass** die Führungsschiene (2) unterhalb der Förderelemente (5) angeordnet ist und die Förderelemente (5) jeweils über einen Laufwagen (10) mit Führungsrollen (11) entlang der Führungsschiene (2) verfahrbar sind.

3. Förderanlage nach Anspruch 2, **dadurch gekennzeichnet, dass** die Laufwagen des ersten Förderelementes und des zweiten Förderelementes (5) über ein Kreuzgelenk miteinander verbunden sind, um die beiden Förderelemente (5) relativ zueinander um die erste Achse (12) und die zweite Achse (15) verschwenkbar zu lagern.

4. Förderanlage nach einem der vorhergehenden Ansprüche, **dadurch gekennzeichnet, dass** das mindestens eine Verbindungselement (6) an dem ersten Förderelement (5) um eine Achse (14) parallel zu der ersten Achse (12) drehbar gelagert ist.

5. Förderanlage nach einem der vorhergehenden Ansprüche, **dadurch gekennzeichnet, dass** das mindestens eine Verbindungselement (6) an dem ersten Förderelement (5) um eine Achse parallel zur zweiten Achse (15) verschwenkbar ist.

6. Förderanlage nach Anspruch 5, **dadurch gekennzeichnet, dass** an dem mindestens einen Verbindungselement (6) eine Lageraufnahme (16) ausgebildet ist, die einen verjüngten Mittelabschnitt und aufgeweitete äußere Abschnitte aufweist, um das mindestens eine Verbindungselement (6) um die Lageraufnahme (16) um die Achse (14) parallel zu der ersten Achse (12) und eine zweite Achse senkrecht zu der Achse und senkrecht zur Fahrtrichtung verschwenkbar zu halten.

7. Förderanlage nach einem der vorhergehenden Ansprüche, **dadurch gekennzeichnet, dass** über die Breite des ersten Förderelementes (5) senkrecht zur Fahrtrichtung eine Vielzahl von Verbindungselementen (6) angeordnet sind.

8. Förderanlage nach einem der vorhergehenden Ansprüche, **dadurch gekennzeichnet, dass** die Aufnahme (13) für das mindestens eine Verbindungselement (6) als Aufnahmekanal ausgebildet ist, der sich im Wesentlichen in Fahrtrichtung des zweiten Förderelementes (5) erstreckt.

9. Förderanlage nach einem der vorhergehenden Ansprüche, **dadurch gekennzeichnet, dass** das mindestens eine Verbindungselement (6) zwischen dem ersten und dem zweiten Förderelement (5) stegförmig ausgebildet ist.

10. Förderanlage nach einem der vorhergehenden Ansprüche, **dadurch gekennzeichnet, dass** die zweite Achse (15) eine im Wesentlichen vertikale Achse zum Verschwenken zweier benachbarter Förderelemente (5) ist, die mittig an dem Förderelement (5) angeordnet ist.

11. Förderanlage nach einem der vorhergehenden Ansprüche, **dadurch gekennzeichnet, dass** jedes Förderelement (5) an mindestens einer Seite entlang einer seitlichen Führung (20) geführt ist.

12. Förderanlage nach Anspruch 11, **dadurch gekennzeichnet, dass** an gegenüberliegenden Seiten der Förderelemente (5) eine Führung (20) angeordnet ist, in die ein Führungselement (14) an jedem Förderelement (5) eingreift.

13. Förderanlage nach Anspruch 12, **dadurch gekennzeichnet, dass** das Führungselement (14) jeweils durch eine Achse gebildet ist, an der die Verbindungselemente (6) verschwenkbar gelagert sind.

14. Förderanlage nach einem der vorhergehenden Ansprüche, **dadurch gekennzeichnet, dass** an der Führungsschiene (2) mindestens ein Motor (42) mit einer Antriebsrolle (40) zum Antrieb der Förderelemente (5) vorgesehen ist.

15. Förderanlage nach Anspruch 14, **dadurch gekennzeichnet, dass** jedes Förderelement (5) einen Laufwagen (10) aufweist, der zwischen der Antriebsrolle (40) und einer Gegendruckrolle (41) durchgeführt ist.
